# EUROPEAN PATENT SPECIFICATION

(11) **EP 0 337 584 B1**
(45) Date of publication and mention of the grant of the patent: **17.08.1994**
(21) Application number: 89201315.2
(22) Date of filing: 11.06.1985
(51) Int. Cl.: C08J 9/22, C08L 23/02, C08K 5/06, C08K 5/10

(54) **Process for the production of expanded particles of a polypropylene resin**
Verfahren zur Herstellung von geschäumten Polypropylenharzpartikeln
Procédé pour préparer des perles expansées de résine de polypropylène

(30) Priority: 14.06.1984 JP 122559/84; 19.06.1984 JP 125520/84
(43) Date of publication of application: 18.10.1989
(62) Divisional of application: 85304138.2
(73) Proprietor: Japan Styrene Paper Corporation, Chiyoda-ku Tokyo (JP)
(72) Inventor: Kuwabara, Hideki, Hadano-shi Kanagawa-ken (JP)
(74) Representative: Allam, Peter Clerk

(56) References cited:
- EP-A- 0 095 109
- EP-A- 0 113 903
- FR-A- 2 245 472
- CHEMICAL ABSTRACTS, vol. 99, part 22, 12th December 1983, page 61, abstract no. 196282w, Columbus, Ohio, US; & JP-A-58 87 024
- CHEMICAL ABSTRACTS, vol. 95, part 14, 5th October 1981, page 7, abstract no. 116468z, Columbus, Ohio, US; & JP-A-81
- CHEMICAL ABSTRACTS, vol. 101, part 10, 3rd September 1984, page 46, abstract 73745k, Columbus, Ohio, US; & JP-A-59 66 431

## Description

This invention relates to a process for the production of expanded particles of a polypropylene resin.

There is a known method of preparing expanded particles of a polypropylene resin, which includes the steps of providing expandable particles of a polypropylene resin containing a volatile blowing agent, dispersing the particles in an aqueous medium contained in a closed vessel, heating the dispersion to a temperature higher than the softening point of the resin while maintaining the pressure within the vessel at a pressure above the vapor pressure of the blowing agent, and discharging the dispersion from the vessel for subjecting same to an atmosphere maintained at a pressure lower than that within the vessel, whereby the particles discharged are expanded. Examples of useful volatile blowing agents include propane, butane, pentane, trichlorofluoromethane and dichlorodifluoromethane. Such a method, however, has been found to involve some problems due to the use of such a volatile blowing agent. Firstly, the temperature at which the expansion is performed should be limited to a specific, narrow range, since otherwise the expandable particles are swelled with the blowing agents which are good solvents for the polymeric material. Therefore, the expansion ratio, which is dependent upon, the expansion temperature, is unavoidably limited within a narrow range. Secondly, some of these blowing agents are dangerous because of their toxicity and inflammability and require the replacement with air after completion of the expansion. Such a replacement requires the recovery of the blowing agents not only because of their cost but also because of their tendency to destroy the ozone layer surrounding the earth.

The present invention has been made with a consideration of the above problems of the conventional expansion method.

Japanese Published Unexamined Patent Application No. 56-49739 (and Chemical Abstracts, 95, abstract No. 116468z) describe a method of producing a foamed polyolefin body, especially by extrusion molding, in which dibenzylidenesorbitol is incorporated into the polyolefin in an amount of from 0.01 to 10% by weight of the polyolefin, in order to assist the production of a foamed body having uniform cell diameters and fine closed cells at a high extrusion speed.

Japanese Published Unexamined Patent Application No. 59-66431 (and Chemical Abstracts, 101, abstract No. 73745k) describe an olefinic foaming composition which includes, in addition to the polyolefin, azodicarboxamide as foaming agent and a mixture of dibenzylidenesorbitol (DBS) and aluminum p-tert-butylbenzoate (ABB). It is asserted that the DBS improves gloss, that the ABB reduces shrinkage and warp and that the conjoint use of DBS and ABB improves the uniformity and fineness of the cell structure in the ultimately molded body.

In accordance with the present invention, there is provided a process for the production of expanded particles, wherein an aqueous dispersion containing expandable particles of a polypropylene resin and provided at a first pressure and a first temperature higher than the softening point of said polypropylene resin is subject to a second pressure lower than said first pressure so that the expandable particles are expanded, and wherein said expandable particles contain a blowing agent which is an organic volatile blowing agent, an inorganic gas or a mixture of an organic volatile blowing agent and an inorganic gas, and also a solid particulate expansion aid having a melting point higher than said first temperature, said process being characterized in that said expansion aid is an organic crystal nucleus material having a particle size of 0.1 to 150 µm and which is present in an amount of 0.05 to 2% based on the weight of said expandable particles.

It has been found that the expansion aid can serve to improve the expansion ratio so that the amount of the organic volatile blowing agent and/or inorganic gas used for imparting expandability to the starting polymer particles may be reduced.

The present invention will now be described in detail below.

In the accompanying drawings, Figs. 1 and 2 are DSC curves of polypropylene resins; and Figs. 3 and 4 are graphs showing the effects of the process of the present invention.

Both crosslinked and non-crosslinked polypropylene resins may be used as a raw material for the production of expanded particles in the present invention. Examples of the non-crosslinked propylene resin include propylene homopolymers, ethylene-propylene random copolymers, ethylene-propylene block copolymers, propylene-butene random copolymers and propylene-ethylene-butene random copolymers. Above all, the use of non-crosslinked propylene-ethylene random copolymers, especially those having an ethylene content of 1-10 wt %, is preferred for reasons of providing good expandability. Examples of crosslinked polypropylene resin include crosslinked propylene homopolymers, crosslinked propylene-ethylene random copolymers, crosslinked propylene-ethylene block copolymers and crosslinked propylene-butene-1 random copolymers. Above all, the use of crosslinked propylene-ethylene copolymers is preferred. The crosslinked polypropylene resins generally have a gel fraction of at least 0.1%.

The crosslinked polypropylene resins may be suitably obtained by a method including mixing a non-crosslinked polypropylene resin in the form of particles, a crosslinking agent, divinylbenzene and an aqueous medium to impregnate the resin particles with the blowing agent and divinylbenzene, and heating the resulting mixture to a temperature sufficient to decompose the crosslinking agent. Illustrative of suitable crosslinking agents are 1,1-bis(t-butylperoxy)-3,3,5-trimethyl-cyclohexane, dicumyl peroxide, t-butylcymyl peroxide, n-butyl-4,4-bis(t-butylperoxy)valate, α,α′-bis(t-butylperoxy)-m-diisopropylbenzene and 2,5-dimethyl-2,5-di(t-butylperoxy)hexane. The crosslinking agent is used in an amount of 0.05 to 5 parts by weight, preferably 0.1 to 2 parts by weight per 100 parts by weight of the resin. Divinylbenzene is generally used in an amount of 0.05 to 5 parts by weight per 100 parts by weight of the resin.

One of the important features of the present invention resides in the incorporation of an organic crystal nucleus material as an expansion aid into the raw material polypropylene resin. The expansion aid should have a particle size of 0.01 to 150 µm, preferably 1 to 100 µm and should be a solid which does not melt at a temperature at which the expansion is performed. Examples of suitable expansion aids include dibenzylidenesorbitol and aluminum p-t-butylbenzoate. The use of dibenzylidenesorbitol is especially preferred because the expanded particles obtained using same have excellent modability and given expanded moldings with excellent dimensional stability.

The amount of the expansion aid incorporated into the polypropylene resin particles should be in the range of 0.05 to 2% based on the weight of the polypropylene particles. At least 0.05 weight % is necessary to achieve the object of the present invention. An amount of the expansion aid over 2 wt % causes excessive reduction of the pore size of the expanded particles. Preferably, the amount of the expansion aid is 0.05 to 0.5 wt %, more preferably 0.1 to 0.3 wt %.

The polypropylene resin having homogeneously incorporated therein the expansion aid is shaped into particles for expansion treatment according to the present invention. Any conventional method may be adopted for the formation of the particles of the expansion aid-containing polypropylene resin. There may be used, for example, a method in which the resin and the expansion aid are kneaded at a temperature higher than the melting point of the resin, followed by pelletizing or shaping into particles; and a method in which polypropylene resin pellets with a high content of the expansion aid and polypropylene resin pellets without containing the expansion aid are kneaded at a temperature above the melting point of the resin, followed by pelletizing or shaping into particles. The expansion aid-containing polypropylene resin particles preferably have a particle size of 0.3 to 5 mm, more preferably 0.5 to 3 mm.

The expansion aid-containing polypropylene resin particles are subjected to an expansion step in a manner known per se. Thus, the resin particles are contacted with the blowing agent ie an inorganic gas, an organic volatile blowing agent or a mixture thereof, to impregnate the resin particles with the blowing agent, heated to a temperature higher than the softening point of the resin, dispersed in an aqueous medium, and maintained under a pressurized condition, thereby to obtain a dispersion maintained at a first pressure and containing expandable resin particles. By subjecting the dispersion to an atmosphere held at a pressure lower than the first pressure, generally ambient pressure, the expandable resin particles are foamed and expanded. The expansion step is preferably performed by opening a valve or outlet port connected to the vessel in which the dispersion is contained under pressure, to thereby discharge the dispersion into the atmosphere.

Examples of organic blowing agents include aliphatic hydrocarbons such as propane, n-butane, i-butane, butylene, i-butene, pentane, neopentane and hexane; halogenated aliphatic hydrocarbons such as monochloromethane, monochloroethane, dichlorofluoromethane, dichlorodifluormethane, trifluoromethane and trichlorotrifluoroethane; and alicyclic hydrocarbons such as cyclopentane and cyclohexane. These compounds may be used singly or a mixture of two or more of them may be employed. Such organic blowing agents may be suitably used in an amount of 2 to 20 parts by weight, more preferably 3 to 18 parts by weight per 100 parts by weight of the polypropylene resin.

Examples of inorganic gas blowing agents include air, nitrogen, carbon dioxide, argon and helium. When an inorganic gas is used as a blowing agent, the unexpanded particles are contacted with the inorganic gas at a pressurized condition, preferably at a pressure of 15 - 100 kg/cm²G, more preferably 20 - 70 kg/cm²G, preferably at a temperature higher than the softening point of the polypropylene resin. The contact time varies with the pressure, temperature, the kind of the polypropylene resin and the intended expansion ratio, but is generally 5 sec to 1 hour, preferably 5 min to 30 min, when the contact is performed at a temperature higher than the softening point of the resin.

The steps including impregnating the resin particles with the blowing agent, heating them, dispersing them in an aqueous medium, and pressurizing them for the formation of a dispersion containing expandable resin particles may be conducted in any desired order. Heating of the resin particles to a temperature above the softening point thereof is preferably carried out gradually at a rate of 1 - 10°C/min, more preferably 2 - 5°C/min. The aqueous medium into which the resin particles are dispersed is generally water which optionally contains an organic solvent such as ethylene glycol, glycerin, methanol or ethanol.

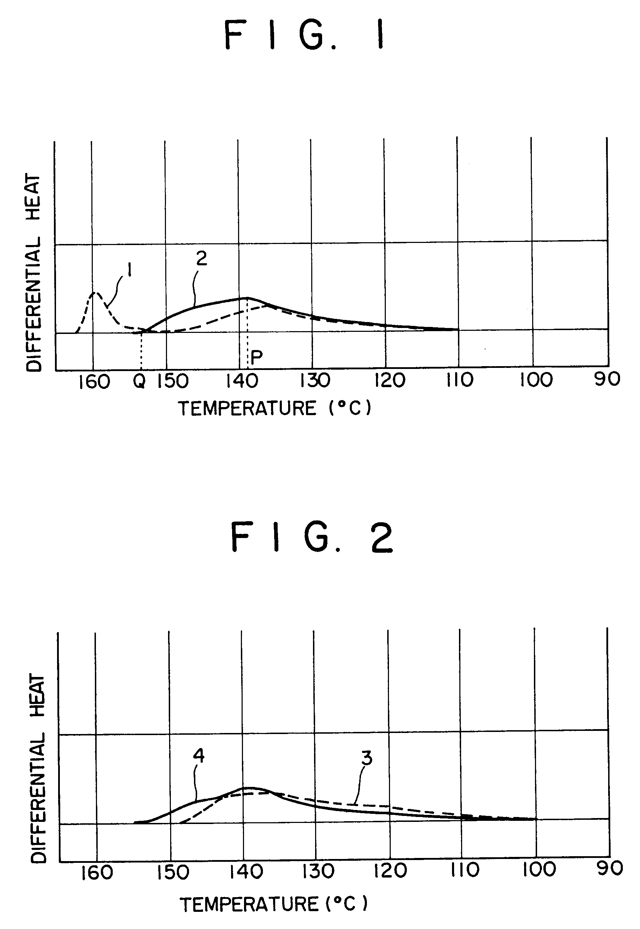

In the present specification, the term "softening point" is intended to mean a value measured in accordance with ASTM D648 with a load of 4.6 Kg/mm² and the term "melting point" is intended to refer to a value measured by differential scanning calorimetric analysis (DSC method (see "Plastics Analysis Guide", Hanser Publishers, page 264+)). In the DSC method, the sample is heated to 200 - 300°C in an atmosphere of nitrogen at a rate of 10°C/min (first heating stage) while measuring the temperature of the sample and the differential heat required for raising the temperature of the sample. After the sample is heated to a predetermined temperature, it is cooled to 50°C at a rate of 10°C/min. Thereafter, the sample is heated again (second heating stage), for example, in the same manner as in the first heating stage. The melting point is a temperature (see point P in Fig. 1) at which a peak exists in the curve obtained when the results of the second heating stage are plotted with the temperature as abscissa against the differential heat as ordinate. When the curve has two or more peaks, the melting point represents the peak at the highest temperature. The temperature at which the curve reached to the base line (see, for example, point Q in Fig. 1) is termed as "melt-completion temperature".

To prevent melt-adhesion of the polymer particles with each other during the expansion step, it is advisable to add to the dispersion finely divided solids which do not soften or melt at a temperature to which the resin particles are heated for effecting the expansion. Illustrative of suitable solids are aluminum oxide, titanium oxide, basic magnesium carbonate, basic zinc carbonate and calcium carbonate. Organic solid particles such as urea-formaldehyde resin particles which are insoluble in the aqueous medium may also be used. Such finely divided solid particles preferably have a particle size of 0.001 to 100 µm, more preferably 0.001 to 30 µm and may be used in an amount of 0.01 to 10 parts by weight per 100 parts by weight of the polypropylene resin particles.

It is preferred that the expandable polypropylene resin particles contained in the dispersion which is subjected to lower pressure conditions for effecting the expansion have secondary crystals since the resulting expanded particles may exhibit excellent moldability and afford molded articles with an excellent dimensional stability. The presence of the secondary crystals is especially preferred when the polypropylene resin is a non-crosslinked polypropylene resin.

The secondary crystals may be generally formed by maintaining the dispersion containing the expandable resin particles at a temperature between a temperature 20°C lower than the melting point of the resin and the melt-completion temperature of the resin for a period of time of 5 - 90 min, preferably 15 - 60 min. By allowing the secondary crystals to form and grow sufficiently, even when the dispersion is heated to an expansion temperature which is higher than the melt-completion temperature, the resultant expanded particles may still contain the secondary crystals which remain undestroyed during the expansion step.

Whether or not the expanded particles produced contain the secondary crystals can be tested by differential scanning calorimetry (DSC) techniques. For this purpose, the polypropylene resin particles (1 to 3 mg) is heated at a rate of 10°C/min to 220°C using a differential scanning calorimeter while measuring the temperature of the sample and the heat required for heating the sample. The results are plotted with the temperature as abscissa and the heat as cordinate to give a curve (first DSC curve). The heated sample is then cooled at a rate of 10°C/min to about 40°C. Thereafter, the sample is again heated in the same manner as in the first heating stage as mentioned above to give a second DSC curve. Each of the first and second DSC curves has a peak (characteristic peak) which is responsible for the absorption of heating during the melting of the resin and which is characteristic to the resin. The temperatures at the characteristic peaks in the first and second DSC curves are the same or different from each other. The difference is below 5°C, generally below 2°C, however. In addition to the characteristic peak there may be a peak (high temperature peak) in the first DSC curve at a temperature higher than that of the characteristic peak. The high temperature peak is attributed to the absorption of heat for the destruction of the secondary crystals. Thus, the existence or non-existence of the secondary crystals can be seen from the presence or absence of the high temperature peak. That is, if the first DSC curve shows substantially no such a high temperature peak, then the sample is regarded as containing substantially no secondary crystals. The second DSC curve shows no such a high temperature peak because the secondary crystals if any have been destroyed during the first heating stage. It is preferred that the difference in temperature between the high temperature peak and characteristic peak of the second DSC curve be great because the greater the difference the more becomes stable the secondary crystals. The difference is preferably over 5°C, more preferably over 10°C.

Figs. 1 and 2 are DSC curves of Sample A (expanded particles of polypropylene having secondary crystals) and Sample B (expanded particles of polypropylene having no secondary crystals( respectively, obtained using a differential scanning calorimeter DT-30 (manufactured by Shimadzu Mfg. Co., Ltd.). In Figs. 1 and 2, the curves 1 and 3 by dotted lines represent first DSC curves while curves 2 and 4 by solid lines are second DSC curves. The curve 1 in Fig. 1 has a high temperature peak at about 160°C in addition to a characteristic peak at about 136°C, indicating the presence of secondary crystals in the expanded particles of Sample A. The curve 3 in Fig. 2 has merely a characteristic peak at about 137°C, showing that no secondary crystals exist in the expanded particles of Sample B. The absence of a high temperature peak in curve 3 is ascribed to the omission of the secondary crystals-forming treatment. The high temperature peak disappears in the second DSC curve 2 of Fig. 1. As described previously, the point P (139°C) at which the second DSC curve 2 becomes maximum is the melting point of the resin and the point Q (153°C) at which the second DSC curve 2 reaches to the base line represents the melt-completion temperature.

As described previously, the expansion temperature is generally not lower than the softening point of the polypropylene resin. A suitable expansion temperature varies with the kind of the blowing agent. When a volatile organic blowing agent is used by itself as the blowing agent, the expansion temperature is preferably between a temperature about 10°C lower than the melting point and a temperature about 5°C higher than the melting point, more preferably between a temperature 5°C lower than the melting point and a temperature about 3°C higher than the melting point. When an inorganic gas is used by itself as the blowing agent the expansion temperature is preferably between the melting point and a temperature about 20°C, more preferably about 18°C higher than the melting point. In the case of cojoint use of the inorganic gas and the volatile organic blowing agent, the expansion temperature is preferably between a temperature about 5°C lower than the melting point and a temperature about 18°C higher than the melting point, more preferably between a temperature about 3°C lower than the melting point and a temperature about 16°C higher than the melting point.

By incorporating the expansion aid into the polypropylene resin particles to be expanded, expanded particles are obtained with an improved expansion ratio so that the amount of a volatile organic blowing agent used can be decreased. Further, the use of the expansion aid can reduce the variation is expansion ratio. Additionally, the incorporation of the expansion aid makes it possible to use an inorganic gas as a blowing agent. The expanded particles obtained by the process of the present invention can be suitably used for various purposes. Especially, they are advantageously used as raw materials for the production of molded foamed articles. In the preparation of such molded articles, the expanded particles are filled in a mold and heated, for example, with steam for further expansion of the particles therewithin.

The following examples will further illustrate the present invention.

### Example 1

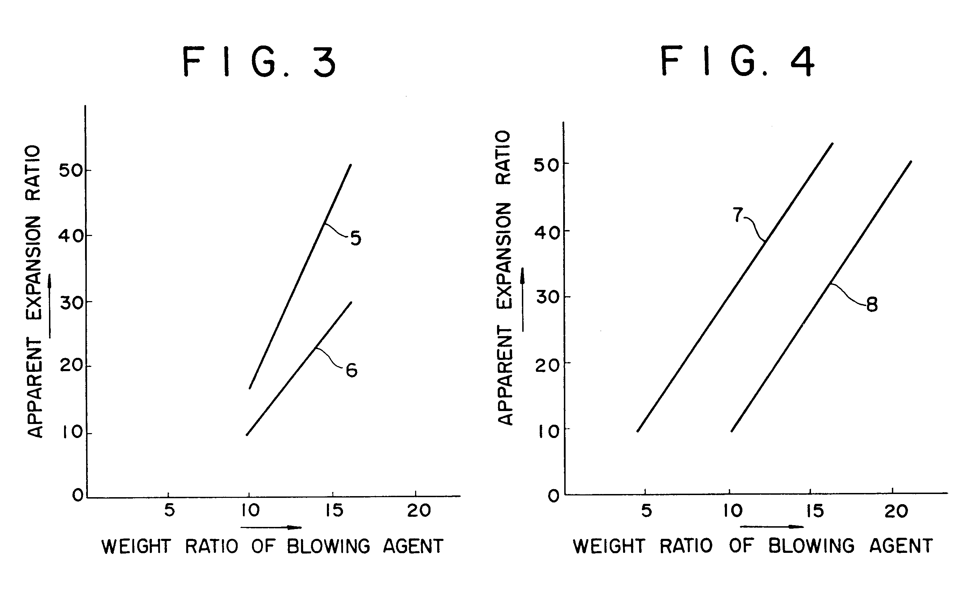

A non-crosslinked ethylene-propylene random copolymer having an ethylene content of 2.8 weight %, a melting point of 145°C and a melt-completion temperature of 155°C and an expansion aid (dibenzylidenesorbitol) were kneaded by means of a mixer and extruded through a die in a strand fashion. The extrudates were immediately immersed into cooling water to form expansion aid-containing polypropylene resin pellets. The content of the expansion aid in the pellets was as shown in Table 1. Into an air-tight vessel were charged 100 parts by weight of the thus obtained pellets, 0.3 parts by weight of finely divided aluminum oxide, 300 parts by weight of water and dichlorodifluoromethane in the amount shown in Table 1. The mixture was then heated to 140°C with stirring and maintained at that temperature for 30 min. Nitrogen gas as fed to the vessel until the pressure therewithin became 40 kg/cm²G. After heating the dispersion within the vessel to 145°C, the vessel was opened to discharge the dispersion contained therewithin into an open atmosphere while maintaining the pressure therewithin unchanged, thereby the pellets were expanded. The apparent expansion ratio (a ratio by apparent volume of expanded particles to unexpanded particles) of the resultant expanded particles was as shown in Table 1. The results of Experiments Nos. 2-4 and 7-9 are also shown by way of a graph in Fig. 3, in which the lines 5 and 6 are plots of Experiments Nos. 2-4 and 7-9, respectively. From the results shown in table 1 and Fig. 3, it is apparent that the incorporation of the expansion aid into the pellets greatly improves the expansion ratio. The expanded particles of Experiments Nos. 1-9 were found to contain secondary crystals.

**Table 1**

| Experiment No. | Content of Expansion Aid* (wt %) | Amount of Blowing agent** (part by weight) | Apparent Expansion Ratio |
|---|---|---|---|
| 1 | 0.06 | 16 | 35 |
| 2 | 0.2 | 16 | 50 |
| 3 | 0.2 | 13 | 33 |
| 4 | 0.2 | 10 | 16 |
| 5 | 0.45 | 16 | 52 |
| 6*** | 0.04 | 16 | 32 |
| 7*** | 0 | 16 | 30 |
| 8*** | 0 | 13 | 20 |
| 9*** | 0 | 10 | 10 |

| | | | |
|---|---|---|---|
| * : Dibenzylidenesorbitol | | | |
| ** : Dichlorodifluoromethane | | | |
| *** : Comparative Experiment | | | |

### Example 2

The Experiment No. 2 of Example 1 was repeated in the same manner as described except that aluminum p-t-butylbenzoate was used as the expansion aid in place of dibenzylidenesorbitol. The expanded particles had an apparent expansion ratio of 48.

### Example 3

100 Parts by weight of the dibenzylidenesorbitol-containing pellets obtained in Example 1, 0.3 parts by weight of aluminum oxide and 300 parts by weight of water were charged into an air-tight vessel, heated to 145°C with stirring and maintained at that temperature for 30 min. The dispersion in the vessel was then heated to 155°C, to which was then fed nitrogen gas until the pressure therewithin reached the value shown in Table 2. Thereafter, the dispersion was maintained at 155°C for additional 30 min to render the polypropylene resin pellets expandable. Then the vessel was opened to discharge the dispersion therefrom while maintaining the pressure therewithin unchanged so that the expandable pellets are expanded. The apparent expansion ratio of each expanded product thus obtained is shown in Table 2. The above procedure was repeated in the same manner as described except that the polypropylene resin pellets containing no dibenzylidenesorbitol were used as a raw material. The results were as shown in Table 2. The expanded particles of Experiments 10-17 were found to contain secondary crystals.

**Table 2**

| Experiment No. | Nitrogen Pressure (Kg/cm²G) | Expansion Ratio |
|---|---|---|
| 10 | 20 | 5 |
| 11 | 30 | 10 |
| 12 | 40 | 16 |
| 13 | 60 | 19 |
| 14* | 20 | 3 |
| 15* | 30 | 7 |
| 16* | 40 | 10 |
| 17* | 60 | 12 |

| | | |
|---|---|---|
| * : Comparative Experiment (without use of expansion aid) | | |

### Example 4

A non-crosslinked ethylene-propylene random copolymer having an ethylene content of 3.5 wt %, a melting point of 142°C and a melt-completion temperature of 155°C was kneaded together with dibenzylidenesorbitol. The kneaded mixture with a dibenzylidenesorbitol content of 0.2 wt % was then shaped into pellets by extrusion in the same manner as that in Example 1. Into an air-tight vessel were then charged 100 parts by weight of the thus obtained pellets, 0.3 parts by weight of finely divided aluminum oxide, 0.5 parts by weight of dicumylperoxide, 1 part by weight of divinylbenzene and 300 parts by weight of water. The mixture was heated to 150°C with stirring and maintained at that temperature for 1 hour to effect crosslinking. After being cooled to room temperature, the resulting dispersion was mixed with 16 parts by weight of dichlorodifluoromethane and heated to 145°C with stirring and maintained at that temperature for 30 min. The resultant dispersion was then heated to 150°C and maintained at that temperature for additional 30 min. After pressurizing the vessel with nitrogen gas to 40 kg/cm²G, the dispersion within the vessel was discharged to the air to allow the pellets to expand. The expanded particles thus obtained had an apparent expansion ratio of 40 and a gel fraction of 40% and were found to contain secondary crystals.

## Claims

1. A process for the production of expanded particles, wherein first an aqueous dispersion containing expandable particles of a polypropylene resin is provided at a first pressure and at a first temperature higher than the softening point of said polypropylene resin, and thereafter said dispersion is subjected to a second pressure lower than said first pressure so that the expandable particles are expanded and wherein said expandable particles contain a blowing agent which is an organic volatile blowing agent, an inorganic gas or a mixture of an organic volatile blowing agent and an inorganic gas, and also a solid particulate expansion aid having a melting point higher than said first temperature, said process being characterized in that said expansion aid is an organic, crystal nucleus material having a particle size of 0.1 to 150 µm and which is present in an amount of 0.05 to 2% based on the weight of said expandable particles.

2. A process as claimed in Claim 1, wherein said crystal nucleus material is dibenzylidenesorbitol or aluminum p-t-butylbenzoate.

3. A process as claimed in Claim 1 or Claim 2, wherein the content of said crystal nucleus material in the polypropylene resin particles is 0.1 to 0.3% by weight.

4. A process as claimed in any preceding claim, wherein said polypropylene resin is an ethylene-propylene random copolymer.

## Patentansprüche

1. Verfahren zur Herstellung von geschäumten Partikeln, in dem zunächst eine schäumfähige Partikeln eines Polypropylenharzes enthaltende wäßrige Dispersion bei einem ersten Druck und bei einer ersten Temperatur, die über dem Erweichungspunkt des Polypropylenharzes liegt, zubereitet und diese Dispersion danach einem zweiten Druck ausgesetzt wird, der niedriger als der erste Druck ist, so daß die schäumfähigen Partikeln aufgeschäumt werden, und in dem die schäumfähigen Partikeln ein Treibmittel, und zwar ein organisches flüchtiges Treibmittel, ein anorganisches Gas oder ein Gemisch aus einem organischen flüchtigen Treibmittel und einem anorganischen Gas, sowie einen festen Verschäumungshilfsstoff mit einem Schmelzpunkt enthalten, der höher liegt als die erste Temperatur, wobei das Verfahren dadurch gekennzeichnet ist, daß es sich bei dem Verschäumungshilfsstoff um ein Kristallisationskeime bildendes organisches Material mit einer Korngröße von 0,1 bis 150 µm handelt und diese Substanz in einer Menge von 0,05 bis 2 Gewichts-% der schäumfähigen Partikeln zugesetzt wurde.

2. Verfahren nach Anspruch 1, in dem es sich bei dem Kristallisationskeime bildenden Material um Dibenzylidensorbitol bzw. Aluminium-p-t-butylbenzoat handelt.

3. Verfahren nach Anspruch 1 oder 2, in dem der Anteil des Kristallisationskeime bildenden Materials 0,1 bis 0,3 Gewichts-% der Polypropylenharz-Partikeln beträgt.

4. Verfahren nach den vorstehenden Ansprüchen, in dem es sich bei dem Polypropylenharz um ein statistisch aufgebautes Ethylenpropylen-Copolymeres handelt.

## Revendications

1. Procédé de production de particules expansées, dans lequel on obtient d'abord une dispersion aqueuse contenant des particules expansibles d'une résine de polypropylène sous une première pression et à une première température, supérieure au point de ramollissement de ladite résine de polypropylène, puis on soumet ladite dispersion à une seconde pression inférieure à ladite première pression, pour que les particules expansibles soient expansées, et dans lequel lesdites particules expansibles contiennent un agent gonflant qui est un agent gonflant volatil organique, un gaz minéral ou un mélange d'un agent gonflant volatil organique et d'un gaz minéral, et aussi un auxiliaire d'expansion particulaire solide ayant un point de fusion supérieur à ladite première température, ledit procédé étant caractérisé en ce que ledit auxiliaire d'expansion est une matière cristalline organique nucléaire ayant une granulométrie de 0,1 à 150 µm et présente en une quantité de 0,05 à 2%, par rapport au poids desdites particules expansibles.

2. Procédé selon la revendication 1, dans lequel ladite matière cristalline nucléaire est le dibenzylidènesorbitol ou le p-t-butylbenzoate d'aluminium.

3. Procédé selon la revendication 1 ou la revendication 2, dans lequel la proportion de ladite matière cristalline nucléaire dans les particules de résine de polypropylène est de 0,1 à 0,3% en poids.

4. Procédé selon l'une quelconque des revendications précédentes, dans lequel ladite résine de polypropylène est un copolymère statistique éthylène-propylène.
